# EUROPEAN PATENT SPECIFICATION

(11) **EP 3 404 944 B1**
(45) Date of publication and mention of the grant of the patent: **27.04.2022**
(21) Application number: 16894849.5
(22) Date of filing: 22.03.2016
(51) Int. Cl.: H04W 8/14, H04W 72/02, H04W 4/70, H04W 76/14, H04W 4/08

(54) **D2D COMMUNICATION METHOD AND DEVICE**
D2D-KOMMUNIKATIONSVERFAHREN UND -VORRICHTUNG
PROCÉDÉ ET DISPOSITIF DE COMMUNICATION D2D

(43) Date of publication of application: 21.11.2018
(73) Proprietor: Huawei Technologies Co., Ltd., Longgang District Shenzhen, Guangdong 518129 (CN)
(72) Inventor: ZHAO, Zhenshan, Shenzhen Guangdong 518129 (CN)
(74) Representative: Epping - Hermann - Fischer
(86) International application number: PCT/CN2016/076972
(87) International publication number: WO 2017/161494

(56) References cited:
- CN-A- 1 980 452
- CN-A- 103 188 742
- CN-A- 104 202 740
- CN-A- 104 811 892
- CN-A- 105 337 893
- US-A1- 2014 226 639
- US-A1- 2016 080 969
- CATT: "T-RPT design for D2D communication", 3GPP DRAFT; R1-142899, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Dresden, Germany; 20140818 - 20140822 17 August 2014 (2014-08-17), XP050788383, Retrieved from the Internet: URL:http://www.3gpp.org/ftp/Meetings_3GPP_ SYNC/RAN1/Docs/ [retrieved on 2014-08-17]

## Description

### TECHNICAL FIELD

The present invention relates to the field of Internet of Vehicles, and in particular, to a D2D communication method and a device.

### BACKGROUND

In recent years, people pay more attention to an automotive network. Vehicle-to-vehicle communication or vehicle to roadside unit communication can improve road traffic safety and reliability and improve traffic efficiency. In the Internet of Vehicles, to ensure safe driving of a vehicle, information such as a location, a speed, or a status of the vehicle needs to be periodically exchanged between vehicles. The information is broadcast to a surrounding vehicle in a single-hop manner. In this case, Device-to-Device (D2D) communication may be used, and the vehicle is considered as User Equipment (UE), to perform vehicle-to-vehicle communication.

According to different transmission modes, D2D communication is specifically classified into a D2D discovery mode and a D2D communication mode. In the D2D communication mode, data is sent in an Scheduling Assignment(SA) + data (service data) mode. When the user equipment needs to send service data, SA information is first sent. The SA information indicates status information of service data sent from a transmit end, and includes time-frequency resource occupation indication information, MCS information, a frequency hopping indication, timing advance information, receiving group ID information, and the like of the data. After successfully receiving and decoding the SA information, user equipment, as a receive end, receives the corresponding service data at a time-frequency resource location indicated by the SA information, and performs decoding in a modulation and coding scheme indicated by the SA information.

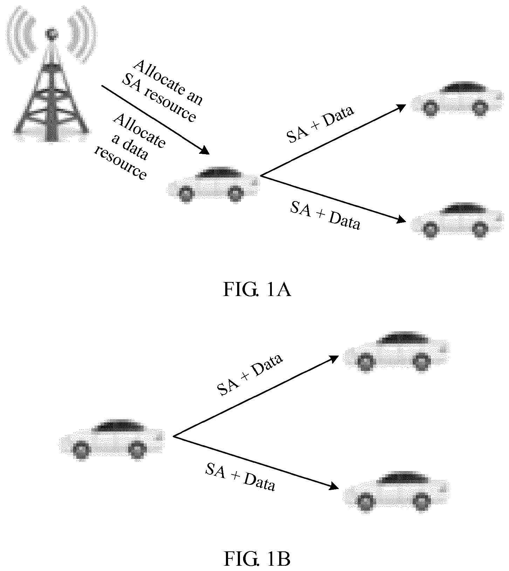

The D2D communication mode may be further classified into two working modes. In Mode 1, as shown in FIG 1A, a base station allocates a determined time-frequency resource in a resource pool to each D2D user equipment, so that the user equipment performs D2D transmission. In Mode 2, as shown in FIG 1B, the user equipment independently and randomly selects an SA resource from an SA information resource pool, and randomly selects a data resource from a service data resource pool, to perform D2D communication.

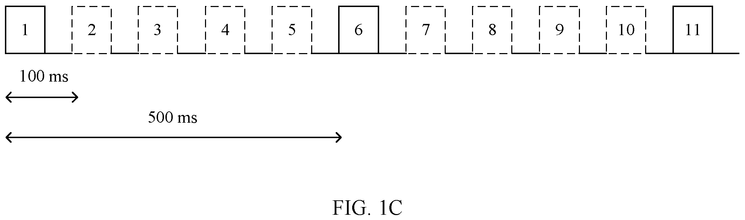

For interaction between UEs in an Internet of Vehicles system, a service cycle of to-be-sent data may vary with an actual driving status. If transmit end UE always occupies a transmission resource that is applicable to a service cycle before a change, transmission resource waste may be caused, and transmission resource utilization is greatly decreased. To explain this problem more clearly, referring to FIG 1C, FIG 1C shows a service cycle of user equipment A. A transmission cycle of the user equipment A is 500 ms. The user equipment A selects a semi-static transmission resource at a moment 1, and performs D2D communication on the semi-static transmission resource. Another user equipment B learns, through monitoring at the moment 1, that the user equipment A occupies a transmission resource, and considers that the transmission resource is always occupied by the user equipment A in every subsequent 100 ms. The user equipment B does not select the transmission resource during subsequent transmission, but selects another transmission resource for communication. Consequently, the transmission resource is not effectively used in subsequent cycles 2 to 5, and resource waste is caused.

The document US 2016/080969 A1 discloses a D2D communication method, comprising: a UE sends a ProSe BSR as a D2D resource request to a eNB, and the UE derives a buffer size value by at least considering an amount of oncoming data. The eNB can determine based on the request that the UE intends to perform a D2D transmission as well as the required amount resources. Then the UE gets a grant from the eNB to transmit on the ProSe physical channel within current SA/data cycle.

### SUMMARY

To avoid transmission resource waste and improve transmission resource utilization, embodiments of the present invention provide a D2D communication method and a device as defined in the independent claims. The embodiments and/or examples of the following description which are not covered by the appended claims are considered as not being part of the present invention. The technical solutions are as follows:
According to a first aspect, an example useful for understanding the present invention but not falling under the scope of protection provides a D2D communication method, including:
generating, by first user equipment, service cycle indication information of the first user equipment based on a service cycle of to-be-sent data; adding the service cycle indication information to the to-be-sent data to obtain D2D data, where the D2D data includes the service cycle indication information; and sending the D2D data. The service cycle indication information of the UE is sent to a receive end by adding the service cycle indication information to the D2D data, so that the receive end can learn of a transmission resource occupation status of the UE through monitoring and the like. The transmission resource occupation status includes the service cycle, a location of an occupied time-frequency resource, and the like. Therefore, an idle transmission resource can be determined, and D2D communication is performed by using the idle transmission resource. In this way, transmission resource waste is avoided, and transmission resource utilization is improved.

In a possible design of the first aspect, the D2D data is scheduling assignment SA information or D2D communication service data. Either of the foregoing information is used as a bearer of the service cycle indication information, so that utilization is improved and flexibility of this implementation is improved.

According to a second aspect, an example useful for understanding the present invention but not falling under the scope of protection provides a D2D communication method, including: receiving, by second user equipment, D2D data of first user equipment, where the D2D data includes service cycle indication information of the first user equipment; determining an idle transmission resource based on the service cycle indication information and time-frequency resource occupation indication information of the first user equipment; and performing D2D communication on the idle transmission resource.

In a possible design of the second aspect, the D2D data is scheduling assignment SA information or D2D communication service data.

According to a third aspect, an embodiment of the present invention provides a D2D communication method, including: sending, by third user equipment, first service cycle indication information to a base station, where the first service cycle indication information is used to indicate that a service cycle of to-be-sent data is a first cycle having a first time duration; receiving first transmission resource indication information sent by the base station, where the first transmission resource indication information is used to indicate a first transmission resource for sending the to-be-sent data of the first cycle; performing D2D communication on the first transmission resource; and sending second service cycle indication information to the base station when the third user equipment determines that the service cycle changes, where the second service cycle indication information is used to indicate that the service cycle of the to-be-sent data is a second cycle having a second time duration, and the first time duration and the second time duration are different. The third user equipment notifies the base station of the service cycle of the third user equipment, so that the base station allocates the transmission resource that can meet the service cycle of the third user equipment to the third user equipment by taking the service cycle of the third user equipment into consideration when allocating the transmission resource. When the service cycle of the third user equipment changes, the UE may further send a new service cycle to the base station, namely, the second service cycle indication information, so that the base station more accurately reallocates a transmission resource to the third user equipment based on the new service cycle.

After the sending, by the third user equipment, second service cycle indication information to the base station when the service cycle changes, the method further includes: receiving, by the third user equipment, second transmission resource indication information sent by the base station, where the second transmission resource indication information is used to indicate a second transmission resource for sending the to-be-sent data of the second cycle; and performing D2D communication on the second transmission resource.

In a possible design of the third aspect, the first service cycle indication information and the second service cycle indication information are carried in a D2D transmission resource request, a BSR, RRC signaling, an uplink control channel, or a MAC CE.

In a possible design of the third aspect, the performing, by the third user equipment, D2D communication on the first transmission resource includes: sending, by the third user equipment, D2D data on the first transmission resource, where the D2D data includes the first service cycle indication information.

In a possible design of the third aspect, the D2D data is scheduling assignment SA information or D2D communication service data.

According to a fourth aspect, an embodiment of the present invention provides a D2D communication method, including: receiving, by a base station, first service cycle indication information sent by third user equipment, where the first service cycle indication information is used to indicate that a service cycle of to-be-sent data is a first cycle having a first time duration; allocating a first transmission resource for sending the to-be-sent data of the first cycle to the third user equipment; sending first transmission resource indication information to the third user equipment, where the first transmission resource indication information is used to indicate the first transmission resource; receiving second service cycle indication information from the third user equipment, where the second service cycle indication information is used to indicate that the service cycle of the to-be-sent data is a second cycle having a second time duration, and the first time duration and the second time duration are different; and reallocating a second transmission resource for sending the to-be-sent data of the second cycle.

The reallocating a transmission resource based on second service cycle indication information when receiving the second service cycle indication information of the third user equipment includes: allocating, by the base station, the second transmission resource for sending the to-be-sent data of the second cycle to the third user equipment, and sending second transmission resource indication information to the third user equipment, where the second transmission resource indication information is used to indicate the second transmission resource.

In a possible design of the fourth aspect, the first service cycle indication information and the second service cycle indication information are carried in a D2D transmission resource request, a BSR, RRC signaling, an uplink control channel, or a MAC CE.

According to a fifth aspect, an example useful for understanding the present invention but not falling under the scope of protection provides user equipment, including:
a generation unit, configured to generate service cycle indication information of the UE based on a service cycle of to-be-sent data;
an adding unit, configured to add the service cycle indication information to the to-be-sent data to obtain D2D data, where the D2D data includes the service cycle indication information; and
a sending unit, configured to send the D2D data.

In a possible design of the fifth aspect, the D2D data is scheduling assignment SA information or D2D communication service data.

According to a sixth aspect, an example useful for understanding the present invention but not falling under the scope of protection provides user equipment, including:
a receiving unit, configured to receive D2D data of the UE, where the D2D data includes service cycle indication information of the UE;
a determining unit, configured to determine an idle transmission resource based on the service cycle indication information and time-frequency resource occupation indication information of the UE; and
a sending unit, configured to perform D2D communication on the idle transmission resource.

In a possible design of the sixth aspect, the D2D data is scheduling assignment SA information or D2D communication service data.

According to a seventh aspect, an embodiment of the present invention provides user equipment, including:
a sending unit, configured to send first service cycle indication information to a base station, where the first service cycle indication information is used to indicate that a service cycle of to-be-sent data is a first cycle having a first time duration; and
a receiving unit, configured to receive first transmission resource indication information sent by the base station, where the first transmission resource indication information is used to indicate a first transmission resource for sending the to-be-sent data of the first cycle; where
the sending unit is configured to perform D2D communication on the first transmission resource; and
the sending unit is further configured to send second service cycle indication information to the base station when the user equipment determines that the service cycle changes, where the second service cycle indication information is used to indicate that the service cycle of the to-be-sent data is a second cycle having a second time duration, and the first time duration and the second time duration are different.

The receiving unit is further configured to receive second transmission resource indication information sent by the base station, where the second transmission resource indication information is used to indicate a second transmission resource for sending the to-be-sent data of the second cycle; and
the sending unit is further configured to perform D2D communication on the second transmission resource.

In a possible design of the seventh aspect, the first service cycle indication information and the second service cycle indication information are carried in a D2D transmission resource request, a BSR, RRC signaling, an uplink control channel, or a MAC CE.

In a possible design of the seventh aspect, the sending unit is configured to send D2D data on the first transmission resource, where the D2D data includes the first service cycle indication information.

In a possible design of the seventh aspect, the D2D data is scheduling assignment SA information or D2D communication service data.

According to an eighth aspect, an embodiment of the present invention provides a base station, including:
a receiving unit, configured to receive first service cycle indication information sent by UE, where the first service cycle indication information is used to indicate that a service cycle of to-be-sent data is a first cycle having a first time duration; an allocation unit, configured to allocate a first transmission resource for sending the to-be-sent data of the first cycle to the UE; and a sending unit, configured to send first transmission resource indication information to the UE, where the first transmission resource indication information is used to indicate the first transmission resource; where the receiving unit is further configured to receive second service cycle indication information of the UE, where the second service cycle indication information is used to indicate that the service cycle of the to-be-sent data is a second cycle having a second time duration, and the first time duration and the second time duration are different; and the allocation unit is further configured to reallocate a transmission resource for sending the to-be-sent data of the second cycle.

The allocation unit is configured to allocate a second transmission resource for sending the to-be-sent data of the second cycle to the UE, and the sending unit is configured to send second transmission resource indication information to the UE, where the second transmission resource indication information is used to indicate the second transmission resource.

In a possible design of the eighth aspect, the first service cycle indication information and the second service cycle indication information are carried in a D2D transmission resource request, a BSR, RRC signaling, an uplink control channel, or a MAC CE.

According to a ninth aspect, an embodiment of the present invention provides user equipment, including a transmitter, a receiver, a processor that is separately connected to the transmitter and the receiver, and the like. Certainly, the user equipment may further include a universal component such as an antenna, a baseband processing unit, an intermediate radio frequency processing unit, or an input/output apparatus. This is no longer limited in this embodiment of the present invention. The user equipment is configured to perform the D2D communication method on a user equipment side in the third aspect or the fourth aspect, or in examples useful for understanding the present invention in the first aspect or the second aspect, by using the transmitter, the receiver, and the processor, so as to avoid transmission resource waste and improve transmission resource utilization.

According to a tenth aspect, an embodiment of the present invention provides a base station, including a transmitter, a receiver, a memory, and a processor that is separately connected to the transmitter, the receiver, and the memory. Certainly, the base station may further include a universal component such as an antenna, a baseband processing unit, an intermediate radio frequency processing unit, or an input/output apparatus. This is no longer limited in this embodiment of the present invention. The base station is configured to perform the D2D communication method on a base station side in the third aspect or the fourth aspect, or in examples useful for understanding the present invention in the first aspect or the second aspect, by using the transmitter, the receiver, and the processor, so as to avoid transmission resource waste and improve transmission resource utilization.

In any possible design above, the service cycle indication information is used to indicate the service cycle of the service data of the UE. For example, when the service cycle is 100 ms, the UE sends the service data every 100 ms.

All of the service cycle indication information, the first service cycle indication information, the second service cycle indication information, the third service cycle indication information, and the fourth service cycle indication information in any aspect above may be expressed in any one of the following forms: a cycle in which a next data packet is located relative to a current cycle and that is expressed in a bit form; or a cycle interval between adjacent data packets that is expressed in a bit form; or a minimum cycle quantity that is included in a service cycle and that is expressed in a bit form; or a resource pool cycle quantity that is included in a service cycle and that is expressed in a bit form; or a radio frame quantity that is included in a service cycle and that is expressed in a bit form; or a subframe quantity that is included in a service cycle and that is expressed in a bit form; or a sidelink synchronization signal cycle quantity that is included in a service cycle and that is expressed in a bit form. The foregoing expression forms greatly improve service cycle indication information flexibility and have strong practicability.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG 1A is a schematic diagram of an implementation scenario of Mode 1 in the background;
FIG 1B is a schematic diagram of an implementation scenario of Mode 2 in the background;
FIG 1C is a schematic diagram of a service cycle of user equipment A;
FIG 2 is a schematic diagram of an implementation scenario of a D2D communication method according to an embodiment of the present invention;
FIG 3 is a schematic diagram of a plurality of service cycles of user equipment according to an embodiment of the present invention;
FIG 4 is a schematic diagram of an interaction process of a D2D end-to-end communication method according to an embodiment of the present invention;
FIG 5 is a schematic diagram of an interaction process of a D2D end-to-end communication method according to an embodiment of the present invention;
FIG 6 is a schematic diagram of an interaction process of performing a D2D communication method in Mode 1 according to an embodiment of the present invention;
FIG 7 is a schematic diagram of an interaction process of a D2D communication method according to an embodiment of the present invention;
FIG 8 is a schematic diagram of an interaction process of an uplink data transmission method according to an example useful for understanding the the present invention but not falling under the scope of protection;
FIG 9 is a schematic structural diagram of user equipment according to an embodiment of the present invention;
FIG 10 is a schematic structural diagram of a base station according to an embodiment of the present invention;
FIG 11 is a schematic structural diagram of user equipment according to an embodiment of the present invention;
FIG 12 is a schematic structural diagram of user equipment according to an embodiment of the present invention;
FIG 13 is a schematic structural diagram of user equipment according to an embodiment of the present invention;
FIG 14 is a schematic structural diagram of a base station according to an embodiment of the present invention;
FIG 15 is a schematic structural diagram of user equipment according to an embodiment of the present invention; and
FIG 16 is a schematic structural diagram of a base station according to an embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

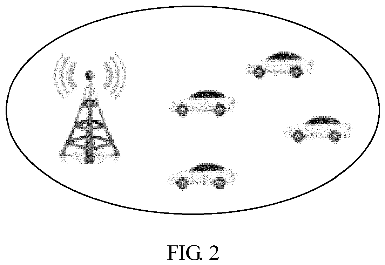

FIG 2 is a schematic diagram of an implementation scenario according to an embodiment of the present invention. Referring to FIG 2, the implementation scenario includes User Equipment (UE) and a base station. The UE provided in this embodiment of the present invention may be an in-vehicle communications system, user equipment installed in a vehicle, some user equipments such as a smartphone and a handheld device of a user in the vehicle, or a handheld terminal device and a wearable device of a pedestrian and a rider, such as a smart watch or a smart helmet. The base station may be a device having a radio resource management function, and can communicate with the user equipment, or is used as a central controller to assist in direct communication between user equipments.

All of service cycle indication information, first service cycle indication information, second service cycle indication information, third service cycle indication information, and fourth service cycle indication information in the following embodiments may be expressed in any one of the following forms:
A first expression form is a cycle in which a next data packet is located relative to a current cycle and that is expressed in a bit form.

To describe a specific representation of the first expression form, an example in which service cycle indication information is information whose length is N bits, N = 4, and a data packet minimum cycle T = 100 ms is used below. It should be noted that the following is merely for illustration purposes and is not a complete example. For another value of N, there may be another representation.

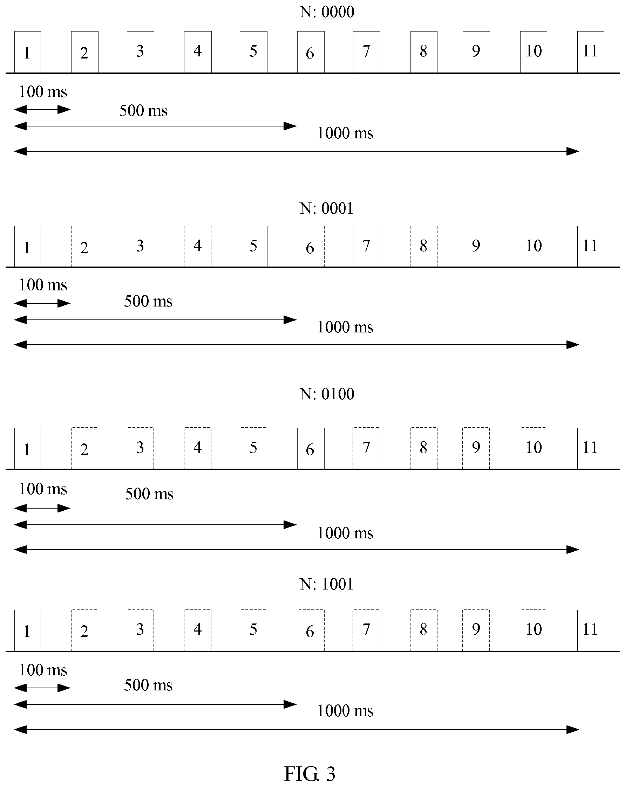

Referring to FIG 3, FIG 3 is a schematic diagram of a plurality of service cycles according to an embodiment of the present invention. 100 ms represents a minimum data packet cycle. Each cycle includes one or more resource pools. A solid line bar represents a time resource in a first resource pool. UE sends data in the resource pool, and reserves in advance a same resource in a subsequent transmission cycle for sending data.
0000: reservation.
0001: representing that a next data packet is in a first cycle relative to a current cycle, that is, a data packet is sent every minimum cycle (every 100 ms).
0010: representing that the next data packet is in a second cycle relative to the current cycle, that is, the data packet is sent every two minimum cycles (every 200 ms).
0011: representing that the next data packet is in a third cycle relative to the current cycle, that is, the data packet is sent every three minimum cycles (every 300 ms).
0100: representing that the next data packet is in a fourth cycle relative to the current cycle, that is, the data packet is sent every four minimum cycles (every 400 ms).

The rest can be deduced in the same manner.
1010: representing that the next data packet is in a tenth cycle relative to the current cycle, that is, the data packet is sent every ten minimum cycles (every 1000 ms).
1011-1111: reservation.

The foregoing specific representation is described by using an example in which 0000 represents reservation. Certainly, in another specific representation, 0000 may be corresponding to the first cycle that is relative to the current cycle and in which the next data packet is located, and so on. This is not specifically limited in this embodiment of the present invention.

A second expression form is a cycle interval between adjacent data packets that is expressed in a bit form.

To describe a specific representation of the second expression form, an example in which service cycle indication information is information whose length is N bits, N = 4, and a data packet minimum cycle T = 100 ms is used below. It should be noted that the following is merely for illustration purposes and is not a complete example. For another value of N, there may be another representation. The data packet minimum cycle may be stipulated in a protocol, preconfigured, or configured by a base station.
0000: representing that an interval between two adjacent service cycles is 0, that is, a data packet is sent every minimum cycle (every 100 ms).
0001: representing that a cycle interval between two adjacent data packets is 1, that is, the data packet is sent every two minimum cycles (every 200 ms).

The rest can be deduced in the same manner.
0100: representing that a cycle interval between two adjacent data packets is 4, that is, the data packet is sent every five minimum cycles (every 500 ms).
1001: representing that a cycle interval between two adjacent data packets is 9, that is, the data packet is sent every ten minimum cycles (every 1000 ms).
1010-1111: reservation.

The foregoing specific representation is described by using an example in which 0000 represents that the interval between two adjacent service cycles is 0. Certainly, in another specific representation, 0001 may represent that the interval between two adjacent service cycles is 0, and so on. This is not specifically limited in this embodiment of the present invention.

A third expression form is a minimum cycle quantity that is included in a service cycle and that is expressed in a bit form.

To describe a specific representation of the third expression form, an example in which service cycle indication information is information whose length is N bits, N = 4, and a data packet minimum cycle T = 100 ms is used below. It should be noted that the following is merely for illustration purposes and is not a complete example. For another value of N, there may be another representation. The data packet minimum cycle may be stipulated in a protocol, preconfigured, or configured by a base station.
0000: reservation.
0001: a service cycle is one minimum cycle T, that is, a data packet is sent every 100 ms.
0010: a service cycle is two minimum cycles T, that is, a data packet is sent every 200 ms.
0011: a service cycle is three minimum cycles T, that is, a data packet is sent every 300 ms.
0100: a service cycle is four minimum cycles T, that is, a data packet is sent every 400 ms.

The rest can be deduced in the same manner.
1010: a service cycle is 10 minimum cycles T, that is, a data packet is sent every 1000 ms.
1011-1111: reservation.

The foregoing specific representation is described by using an example in which 0000 represents reservation. Certainly, in another specific representation, 0000 may represent that a service cycle is one minimum cycle T, and so on. This is not specifically limited in this embodiment of the present invention.

In the foregoing first to the third expression forms, the service cycle uses the data packet minimum cycle as a time unit. The minimum cycle may not be T = 100 ms in the foregoing example and may take another value. Details are not described herein. In addition, in another expression form, the service cycle may use another time unit, such as a resource pool cycle, a radio frame, or a subframe. The resource pool cycle may be an SA resource pool cycle, a data resource pool cycle, or the like configured by a system. The resource pool cycle represents a subframe quantity included in a resource pool. If the resource pool cycle is 50 ms, the resource pool includes 50 subframes. To describe specific implementation, the following describes a case in which the resource pool cycle is the time unit.

A fourth expression form is a resource pool cycle quantity that is included in a service cycle and that is expressed in a bit form.

To describe a specific representation of the fourth expression form, an example in which service cycle indication information is information whose length is N bits, N = 4, and a resource pool cycle P = 50 ms is used below. It should be noted that the following is merely for illustration purposes and is not a complete example. For another value of N, there may be another representation. The resource pool cycle may be stipulated in a protocol, preconfigured, or configured by a base station.
0000: reservation (having no meaning).
0001: a service cycle is two resource pool cycles P, that is, a data packet is sent every 100 ms.
0010: a service cycle is four resource pool cycles P, that is, a data packet is sent every 200 ms.
0011: a service cycle is six resource pool cycles P, that is, a data packet is sent every 300 ms.
0100: a service cycle is eight resource pool cycles P, that is, a data packet is sent every 400 ms.

The rest can be deduced in the same manner.
1010: a service cycle is 20 resource pool cycles P, that is, a data packet is sent every 1000 ms.
1011-1111: reservation.

The foregoing specific representation is described by using an example in which 0000 represents reservation. Certainly, in another specific representation, 0000 may represent that a service cycle is two resource pool cycles P. Alternatively, in another representation, 0001 may represent that a service cycle is one resource pool cycle P, and so on. This is not specifically limited in this embodiment of the present invention.

The service cycle may alternatively use the radio frame as the time unit. For example:
A fifth expression form is a radio frame quantity that is included in a service cycle and that is expressed in a bit form.

To describe a specific representation of the fifth expression form, an example in which service cycle indication information is information whose length is N bits, N = 4, and a radio frame S = 10 ms is used below. It should be noted that the following is merely for illustration purposes and is not a complete example. For another value of N, there may be another representation.
0000: reservation (having no meaning).
0001: a service cycle is 10 radio frames S, that is, a data packet is sent every 100 ms.
0010: a service cycle is 20 radio frames S, that is, a data packet is sent every 200 ms.
0011: a service cycle is 30 radio frames S, that is, a data packet is sent every 300 ms.
0100: a service cycle is 40 radio frames S, that is, a data packet is sent every 400 ms.

The rest can be deduced in the same manner.
1010: a service cycle is 100 radio frames S, that is, a data packet is sent every 1000 ms.
1011-1111: reservation.

The foregoing specific representation is described by using an example in which 0000 represents reservation. Certainly, in another specific representation, 0000 may represent that a service cycle is 10 radio frames S. Alternatively, in another specific representation, 0001 may represent that a service cycle is one radio frame S, and so on. This is not specifically limited in this embodiment of the present invention.

The service cycle may alternatively use the subframe as the time unit. For example:
A sixth expression form is a subframe quantity that is included in a service cycle and that is expressed in a bit form.

To describe a specific representation of the sixth expression form, an example in which service cycle indication information is information whose length is N bits, N = 4, and a subframe F = 1 ms is used below. It should be noted that the following is merely for illustration purposes and is not a complete example. For another value of N, there may be another representation.
0000: reservation (having no meaning).
0001: a service cycle is 100 subframes F, that is, a data packet is sent every 100 ms.
0010: a service cycle is 200 subframes F, that is, a data packet is sent every 200 ms.
0011: a service cycle is 300 subframes F, that is, a data packet is sent every 300 ms.
0100: a service cycle is 400 subframes F, that is, a data packet is sent every 400 ms.

The rest can be deduced in the same manner.
1010: a service cycle is 1000 subframes F, that is, a data packet is sent every 1000 ms.
1011-1111: reservation.

The foregoing specific representation is described by using an example in which 0000 represents reservation. Certainly, in another specific representation, 0000 may represent that a service cycle is 100 subframes F, and so on. This is not specifically limited in this embodiment of the present invention.

The service cycle may alternatively use a sidelink synchronization signal cycle as the time unit. A sidelink synchronization signal is a synchronization signal sent by a terminal during D2D communication and is used for time-frequency synchronization between a receive end and a transmit end. The sidelink synchronization signal occupies six physical resource blocks in the middle of system bandwidth and is sent every X ms. For example, when X = 40, the sidelink synchronization signal cycle in a D2D system is 40 ms. For example:
A seventh expression form is a sidelink synchronization signal cycle quantity that is included in a service cycle and that is expressed in a bit form.

To describe a specific representation of the seventh expression form, an example in which service cycle indication information is information whose length is N bits, N = 4, and a sidelink synchronization signal cycle SS = 40 ms is used below. It should be noted that the following is merely for illustration purposes and is not a complete example. For another value of N, there may be another representation.
0000: reservation (having no meaning).
0001: a service cycle is one sidelink synchronization signal cycle SS, that is, a data packet is sent every 40 ms.
0010: a service cycle is two sidelink synchronization signal cycles SS, that is, a data packet is sent every 80 ms.

The rest can be deduced in the same manner.

The foregoing specific representation is described by using an example in which 0000 represents reservation. Certainly, in another specific representation, 0000 may represent that a service cycle is one sidelink synchronization signal cycle SS, and so on. This is not specifically limited in this embodiment of the present invention.

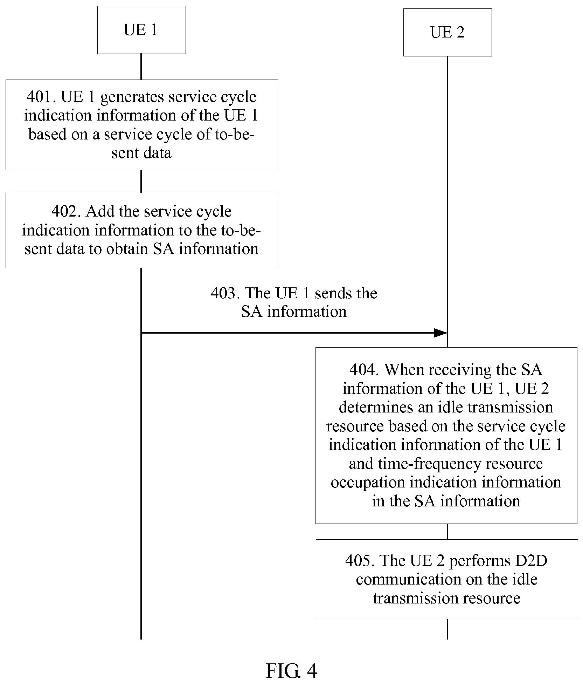

During D2D communication, user equipments send SA information and service data to each other. The user equipment may add service cycle indication information of a transmit end to the SA information or the service data. Herein, the communication method is described by using an example in which the service cycle indication information of the transmit end is added to the SA information. FIG 4 is a schematic diagram of an interaction process of a D2D end-to-end communication method according to an embodiment of the present invention. Referring to FIG 4, the interaction process includes the following steps.

401. UE 1 generates service cycle indication information of the UE 1 based on a service cycle of to-be-sent data.

402. Add the service cycle indication information to the to-be-sent data to obtain SA information. The SA information includes the service cycle indication information of the UE 1.

403. The UE 1 sends the SA information.

The service cycle indication information is used to indicate a service cycle of service data of the UE 1. If the service cycle is 100 ms, the UE 1 sends the service data every 100 ms.

The service cycle indication information may be expressed in any one of the foregoing several forms. Details are not described herein again.

404. When receiving the SA information of the UE 1, UE 2 determines an idle transmission resource based on the service cycle indication information of the UE 1 and time-frequency resource occupation indication information in the SA information.

Because the SA information includes the time-frequency resource occupation indication information, the time-frequency resource occupation indication information may indicate a time-frequency resource location used when the UE 1 sends data. The SA information further carries the service cycle indication information, so that the UE 2 can learn of, based on the SA information, a specific interval and a specific time-frequency resource for sending data by the UE 1. That is, the UE 2 can learn of a specific status of a time-frequency resource occupied by the UE 1. Based on the occupation status, the UE 2 can learn of a time-frequency resource that is not occupied and a time at which the time-frequency resource is not occupied. That is, the UE 2 can learn of the idle transmission resource.

405. The UE 2 performs D2D communication on the idle transmission resource.

After learning of the idle transmission resource, the UE 2 may perform D2D communication with another UE on the idle transmission resource, such as sending the SA information on the idle transmission resource or sending the data on the idle transmission resource.

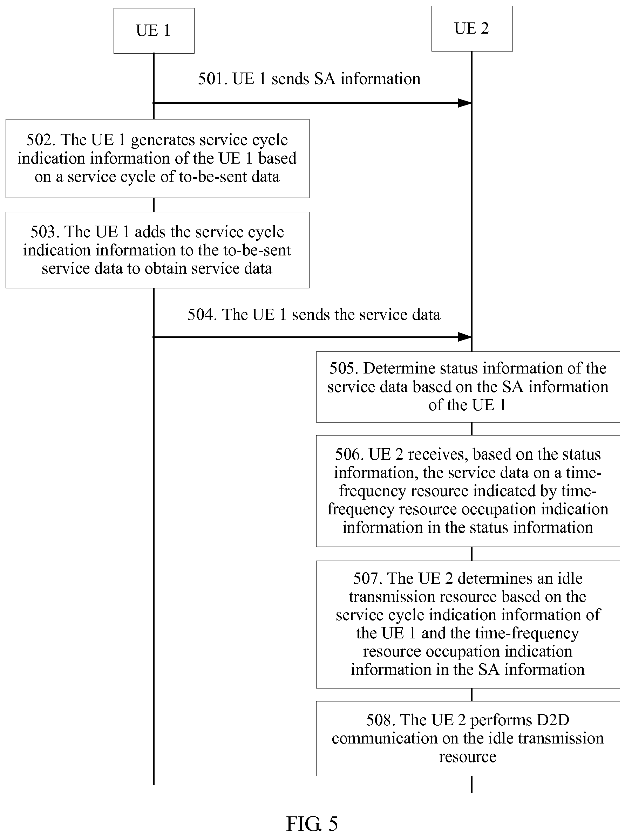

In another possible implementation, the communication method is described by using an example in which the service cycle indication information of the transmit end is added to the service data. FIG 5 is a schematic diagram of an interaction process of a D2D end-to-end communication method according to an embodiment of the present invention. Referring to FIG 5, the interaction process includes the following steps.

501. UE 1 sends SA information. The SA information is used to indicate status information of service data, and the status information includes at least time-frequency resource occupation indication information of the service data.

The status information may further include MCS information, a frequency hopping indication, timing advance information, receiving group ID information, and the like.

502. The UE 1 generates service cycle indication information of the UE 1 based on a service cycle of to-be-sent data.

503. The UE 1 adds the service cycle indication information to the to-be-sent service data to obtain the service data. The service data includes the service cycle indication information of the UE 1.

504. The UE 1 sends the service data.

505. When receiving the SA information of the UE 1, UE 2 determines the status information of the service data based on the SA information of the UE 1.

506. The UE 2 receives, based on the status information, the service data on a time-frequency resource indicated by the time-frequency resource occupation indication information in the status information. The service data includes the service cycle indication information of the UE 1.

The foregoing determining process and receiving process may be similar to an existing process of receiving service data based on SA information. Details are not described herein.

507. The UE 2 determines an idle transmission resource based on the service cycle indication information of the UE 1 and the time-frequency resource occupation indication information in the SA information.

508. The UE 2 performs D2D communication on the idle transmission resource.

Steps 507 and 508 are similar to steps 404 and 405, and details are not described herein again.

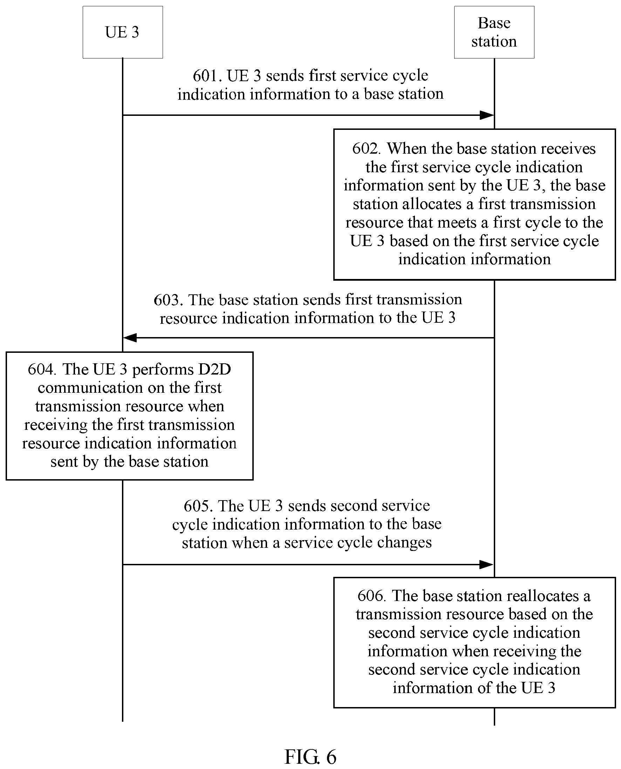

In an implementation scenario of Mode 1, a base station allocates a transmission resource in a preset semi-static resource pool to UE. FIG 6 is a schematic diagram of an interaction process of performing a D2D communication method in Mode 1 according to an embodiment of the present invention. Referring to FIG 6, the interaction process includes the following steps.

601. UE 3 sends first service cycle indication information to a base station. The first service cycle indication information is used to indicate that a service cycle of to-be-sent data is a first cycle.

The first service cycle indication information may be carried in a D2D transmission resource request, a BSR, Radio Resource Control (RRC) signaling, an uplink control channel, or a MAC CE.

602. When the base station receives the first service cycle indication information sent by the UE 3, the base station allocates a first transmission resource that meets the first cycle to the UE 3 based on the first service cycle indication information.

If the first service cycle indication information is carried in the D2D transmission resource request, step 602 is performed when the D2D transmission resource request is received. However, when the first service cycle indication information is carried in the BSR, the RRC signaling, the uplink control channel, or the MAC CE, the base station may allocate the transmission resource to the UE 3 based on the received first service cycle indication information and the D2D transmission resource request after receiving the D2D transmission resource request.

In this embodiment of the present invention, the first transmission resource that meets the first cycle is a first transmission resource whose service cycle can meet the first cycle. The base station allocates a semi-static transmission resource based on first cycle information so that the UE 3 sends data. For example, when the first cycle is 100 ms, the UE 3 needs to occupy a specific time-frequency resource every 100 ms to send the data. The first transmission resource is a set of time-frequency resources, and not only includes a time-frequency resource for SA transmission but also includes a time-frequency resource for data transmission. For example, the base station allocates M1 subframes to SA every 100 ms and allocates N1 physical resource blocks in each subframe for SA transmission, and allocates M2 subframes to the data and allocates N2 physical resource blocks in each subframe for data transmission. The UE 3 sends the data by using a same time-frequency resource every 100 ms.

603. The base station sends first transmission resource indication information to the UE 3. The first transmission resource indication information is used to indicate the first transmission resource.

The first transmission resource indicated by the first transmission resource indication information may be a semi-static transmission resource. That is, the UE 3 may always perform D2D transmission by using the first transmission resource until a resource is reallocated.

604. The UE 3 performs D2D communication on the first transmission resource when receiving the first transmission resource indication information sent by the base station.

The D2D communication process may be similar to step 403, and details are not described herein again.

605. The UE 3 sends second service cycle indication information to the base station when the service cycle changes. The second service cycle indication information is used to indicate that the service cycle of the to-be-sent data changes to a second cycle, and the first cycle and the second cycle are different.

Similar to the first service cycle indication information, the second service cycle indication information may be carried in a D2D transmission resource request, a BSR, RRC signaling, an uplink control channel, or a MAC CE.

A service cycle of some to-be-sent data may change due to different environments or system setting. For example, the service cycle changes from 100 ms to 200 ms. In this case, if D2D communication is still performed based on the first transmission resource, some transmission resources are wasted. To avoid resource waste, when detecting that the service cycle of the to-be-sent data of the UE 3 is different from a previous service transmission cycle, the UE 3 needs to request the base station to reallocate a resource and send new service cycle indication information to the base station.

606. The base station reallocates a transmission resource based on the second service cycle indication information when receiving the second service cycle indication information of the UE 3. The second service cycle indication information is used to indicate that the service cycle of the to-be-sent data changes to the second cycle.

In this case, if the first cycle is greater than the second cycle, reallocating a resource can ensure normal sending of the service data of the UE 3. If the first cycle is less than the second cycle, reallocating a resource can avoid transmission resource waste and improve transmission resource utilization.

Specifically, during reallocation, the following process may be performed: The base station allocates a second transmission resource that meets the second cycle to the UE, and sends second transmission resource indication information to the UE. The second transmission resource indication information is used to indicate the second transmission resource. When the UE 3 receives the second transmission resource indication information sent by the base station, the UE 3 performs D2D communication on the second transmission resource. The second transmission resource indication information is used to indicate the second transmission resource that meets the second cycle.

In the foregoing D2D communication process, when the service cycle of the to-be-sent data changes, the base station may be triggered in a timely manner to reallocate the transmission resource. In addition, during allocation, a changed service cycle is fully considered, so that the allocated transmission resource can meet a requirement of the changed service cycle. In this way, transmission resource waste is avoided, and transmission resource utilization is improved. Further, such a reallocation process triggered by the UE has higher timeliness and correspondingly improves flexibility of allocating the transmission resource by the base station.

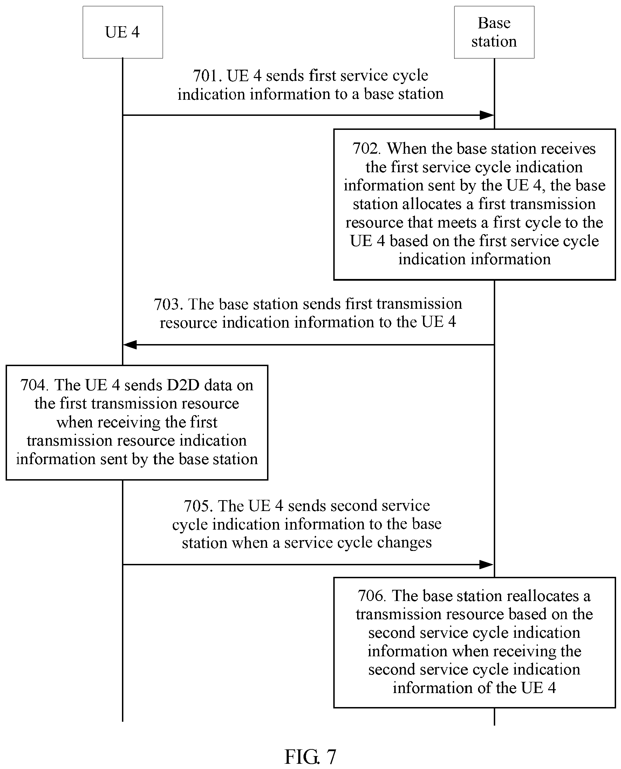

The embodiment shown in FIG 6 describes resource allocation in Mode 1. In actual application, a resource pool in Mode 1 may overlap with a resource pool in another mode such as a resource pool in Mode 2. In this scenario, an embodiment shown in FIG 7 is provided. Specifically, FIG 7 is a schematic diagram of an interaction process of a D2D communication method according to an embodiment of the present invention. Referring to FIG 7, the interaction process includes the following steps.

701. UE 4 sends first service cycle indication information to a base station. The first service cycle indication information is used to indicate that a service cycle of to-be-sent data is a first cycle.

The first service cycle indication information is similar to that in step 601, and details are not described herein again.

702. When the base station receives the first service cycle indication information sent by the UE 4, the base station allocates a first transmission resource that meets the first cycle to the UE 4 based on the first service cycle indication information.

703. The base station sends first transmission resource indication information to the UE 4. The first transmission resource indication information is used to indicate the first transmission resource. Steps 702 and 703 are similar to steps 602 and 603, and details are not described herein again.

704. The UE 4 sends D2D data on the first transmission resource when receiving the first transmission resource indication information sent by the base station. The D2D data includes the first service cycle indication information.

The D2D data is scheduling assignment SA information or D2D communication service data.

Step 704 is similar to the D2D communication process shown in FIG 4 and FIG 5. The first service cycle indication information is added to the D2D data (such as the SA information or the service data), so that another UE that receives the D2D data can determine an idle transmission resource based on the first service cycle indication information and time-frequency resource occupation indication information of the UE and perform D2D communication on the idle transmission resource.

705. The UE 4 sends second service cycle indication information to the base station when the service cycle changes. The second service cycle indication information is used to indicate that the service cycle of the to-be-sent data changes to a second cycle, and the first cycle and the second cycle are different.

706. The base station reallocates a transmission resource based on the second service cycle indication information when receiving the second service cycle indication information of the UE 4. The second service cycle indication information is used to indicate that the service cycle of the to-be-sent data changes to the second cycle.

Steps 705 and 706 are similar to steps 605 and 606, and details are not described herein again.

In the foregoing D2D communication process, when the service cycle of the to-be-sent data changes, the base station may be triggered in a timely manner to reallocate the transmission resource. In addition, during allocation, a changed service cycle is fully considered, so that the allocated transmission resource can meet a requirement of the changed service cycle. In this way, transmission resource waste is avoided, and transmission resource utilization is improved. Further, such a reallocation process triggered by the UE has higher timeliness and correspondingly improves flexibility of allocating the transmission resource by the base station. Still further, the UE 4 that occupies the first transmission resource provides a transmission resource occupation status of the UE 4 for a receive end UE, so that the receive end UE can learn of a resource occupation status of the UE 4 by detecting, when monitoring an available resource, the first service cycle indication information added to the D2D data by other users (including a user in Mode 1 and a user in Mode 2). In this way, transmission resource utilization is further improved.

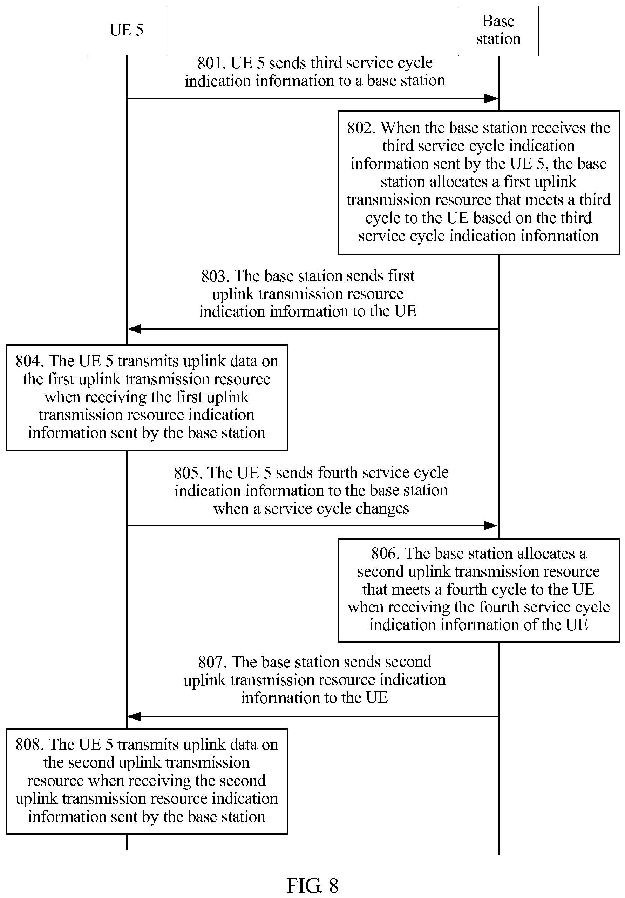

In another embodiment, D2D communication may be performed in a base station forwarding manner. A transmit end UE sends service data of the UE to a base station, and then the base station performs broadcasting. Before transmitting the service data, the transmit end UE needs to request an uplink transmission resource from the base station. The base station allocates a semi-static transmission resource to a terminal so that the terminal transmits uplink data. In this case, once the semi-static transmission resource is allocated, if a service cycle of the transmit end UE changes, for example, the service cycle changes from 100 ms to 200 ms, uplink transmission resource waste is caused. Therefore, a method shown in FIG 8 is provided. FIG 8 is a schematic diagram of an interaction process of an uplink data transmission method according to an embodiment of the present invention. Referring to FIG 8, the interaction process includes the following steps.

801. UE 5 sends third service cycle indication information to a base station. The third service cycle indication information is used to indicate that a service cycle of to-be-sent data is a third cycle. Similar to the foregoing first service cycle indication information and the foregoing second service cycle indication information, the third service cycle indication information is carried in an uplink transmission resource request, a BSR, RRC signaling, an uplink control channel, or a MAC CE.

802. When the base station receives the third service cycle indication information sent by the UE 5, the base station allocates a first uplink transmission resource that meets the third cycle to the UE based on the third service cycle indication information.

The UE 5 notifies the base station of the third service cycle indication information of the UE 5, so that the base station can more accurately allocate an uplink resource to the UE 5 when allocating the uplink resource. In this way, uplink transmission resource waste is avoided, and uplink transmission resource utilization is improved.

803. The base station sends first uplink transmission resource indication information to the UE. The first uplink transmission resource indication information is used to indicate the first uplink transmission resource that meets the third cycle.

804. The UE 5 transmits uplink data on the first uplink transmission resource when receiving the first uplink transmission resource indication information sent by the base station.

Further, when the service cycle changes, the UE 5 may further perform the following steps.

805. The UE 5 sends fourth service cycle indication information to the base station when the service cycle changes. The fourth service cycle indication information is used to indicate that the service cycle of the to-be-sent data changes to a fourth cycle, and the third cycle and the fourth cycle are different.

806. The base station allocates a second uplink transmission resource that meets the fourth cycle to the UE when receiving the fourth service cycle indication information of the UE.

Actually, step 806 is a process in which the base station reallocates an uplink transmission resource based on the fourth service cycle indication information. Certainly, the base station may further allocate a transmission resource that is no longer occupied by the UE 5 to another UE when performing reallocation on the uplink transmission resource.

807. The base station sends second uplink transmission resource indication information to the UE. The second uplink transmission resource indication information is used to indicate the fourth transmission resource.

808. The UE 5 transmits uplink data on the second uplink transmission resource when receiving the second uplink transmission resource indication information sent by the base station.

The uplink transmission resource request process and the re-request process based on a service cycle change are similar to the D2D transmission resource request process and the re-request process based on a service cycle change provided in the foregoing embodiment. Specific processes are not described in detail herein again.

In the foregoing D2D communication process, when the service cycle of the to-be-sent data changes, the base station may be triggered in a timely manner to reallocate the uplink transmission resource. In addition, during allocation, a changed service cycle is fully considered, so that the allocated uplink transmission resource can meet a requirement of the changed service cycle. In this way, uplink transmission resource waste is avoided, and uplink transmission resource utilization is improved. Further, such a reallocation process triggered by the UE has higher timeliness and correspondingly improves flexibility of allocating the uplink transmission resource by the base station.

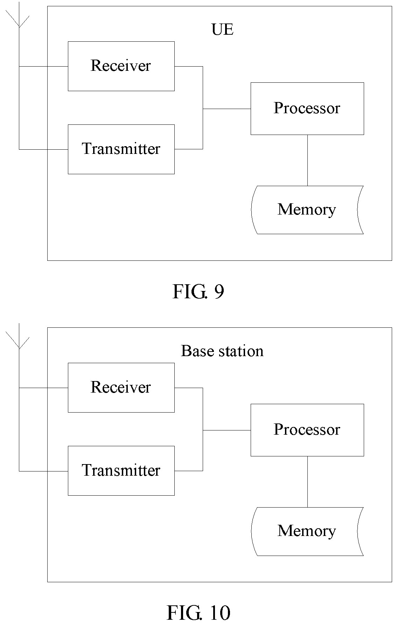

Referring to FIG 9, FIG 9 is a schematic structural diagram of user equipment according to an embodiment of the present invention. As shown in FIG 9, the user equipment includes a transmitter, a receiver, a memory, and a processor that is separately connected to the transmitter, the receiver, and the memory. Certainly, the user equipment may further include a universal component such as an antenna, a baseband processing unit, an intermediate radio frequency processing unit, or an input/output apparatus. This is no longer limited in this embodiment of the present invention.

The user equipment is configured to perform the D2D communication method on a user equipment side provided in any embodiment in FIG 4 to FIG 8.

Referring to FIG 10, FIG 10 is a schematic structural diagram of a base station according to an embodiment of the present invention. As shown in FIG 10, the base station includes a transmitter, a receiver, a memory, and a processor that is separately connected to the transmitter, the receiver, and the memory. Certainly, the base station may further include a universal component such as an antenna, a baseband processing unit, an intermediate radio frequency processing unit, or an input/output apparatus. This is no longer limited in this embodiment of the present invention.

The base station is configured to perform the D2D communication method on a base station side provided in any embodiment in FIG 6 to FIG 8.

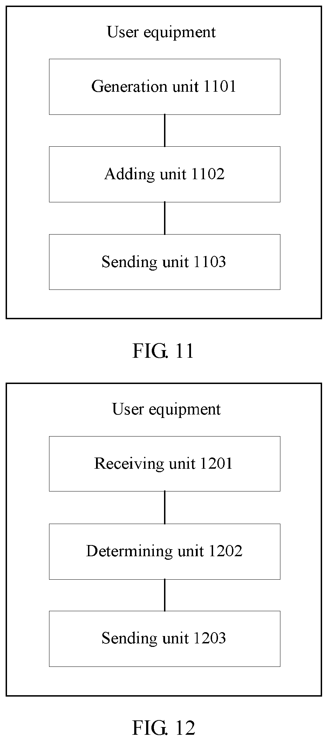

FIG 11 is a schematic structural diagram of user equipment according to an embodiment of the present invention. Referring to FIG 11, the user equipment includes:
a generation unit 1101, configured to generate service cycle indication information of the UE based on a service cycle of to-be-sent data;
an adding unit 1102, configured to add the service cycle indication information to the to-be-sent data to obtain D2D data, where the D2D data includes the service cycle indication information; and
a sending unit 1103, configured to send the D2D data.

Optionally, the service cycle indication information is:
a cycle in which a next data packet is located relative to a current cycle and that is expressed in a bit form; or
a cycle interval between adjacent data packets that is expressed in a bit form; or
a minimum cycle quantity that is included in a service cycle and that is expressed in a bit form; or
a resource pool cycle quantity that is included in a service cycle and that is expressed in a bit form; or
a radio frame quantity that is included in a service cycle and that is expressed in a bit form; or
a subframe quantity that is included in a service cycle and that is expressed in a bit form; or
a sidelink synchronization signal cycle quantity that is included in a service cycle and that is expressed in a bit form.

Optionally, the D2D data is scheduling assignment SA information or D2D communication service data.

FIG 12 is a schematic structural diagram of user equipment according to an embodiment of the present invention. Referring to FIG 12, the user equipment includes:
a receiving unit 1201, configured to receive D2D data of the UE, where the D2D data includes service cycle indication information of the UE;
a determining unit 1202, configured to determine an idle transmission resource based on the service cycle indication information and time-frequency resource occupation indication information of the UE; and
a sending unit 1203, configured to perform D2D communication on the idle transmission resource.

Optionally, the service cycle indication information is:
a cycle in which a next data packet is located relative to a current cycle and that is expressed in a bit form; or
a cycle interval between adjacent data packets that is expressed in a bit form; or
a minimum cycle quantity that is included in a service cycle and that is expressed in a bit form; or
a resource pool cycle quantity that is included in a service cycle and that is expressed in a bit form; or
a radio frame quantity that is included in a service cycle and that is expressed in a bit form; or
a subframe quantity that is included in a service cycle and that is expressed in a bit form; or
a sidelink synchronization signal cycle quantity that is included in a service cycle and that is expressed in a bit form.

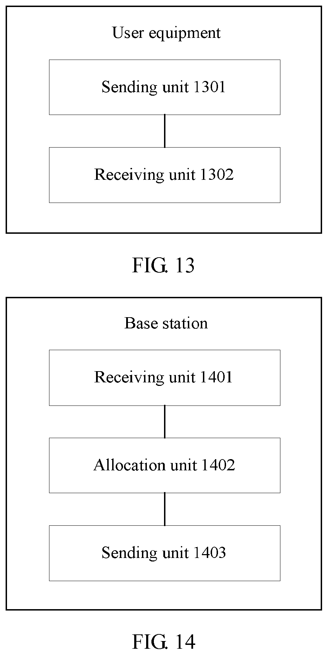

FIG 13 is a schematic structural diagram of user equipment according to an embodiment of the present invention. Referring to FIG 13, the user equipment includes:
a sending unit 1301, configured to send first service cycle indication information to a base station, where the first service cycle indication information is used to indicate that a service cycle of to-be-sent data is a first cycle; and
a receiving unit 1302, configured to receive first transmission resource indication information sent by the base station, where the first transmission resource indication information is used to indicate a first transmission resource that meets the first cycle.

The sending unit 1301 is configured to perform D2D communication on the first transmission resource.

The sending unit 1301 is further configured to send second service cycle indication information to the base station when the service cycle changes. The second service cycle indication information is used to indicate that the service cycle of the to-be-sent data changes to a second cycle, and the first cycle and the second cycle are different.

Optionally, the receiving unit 1302 is further configured to receive second transmission resource indication information sent by the base station. The second transmission resource indication information is used to indicate a second transmission resource that meets the second cycle.

The sending unit 1301 is further configured to perform D2D communication on the second transmission resource.

Optionally, the first service cycle indication information and the second service cycle indication information are carried in a D2D transmission resource request, a BSR, RRC signaling, an uplink control channel, or a MAC CE.

Optionally, the sending unit 1301 is configured to send D2D data on the first transmission resource. The D2D data includes the first service cycle indication information.

Optionally, the D2D data is scheduling assignment SA information or D2D communication service data.

Optionally, an expression form for the first service cycle indication information and the second service cycle indication information is:
a cycle in which a next data packet is located relative to a current cycle and that is expressed in a bit form; or
a cycle interval between adjacent data packets that is expressed in a bit form; or
a minimum cycle quantity that is included in a service cycle and that is expressed in a bit form; or
a resource pool cycle quantity that is included in a service cycle and that is expressed in a bit form; or
a radio frame quantity that is included in a service cycle and that is expressed in a bit form; or
a subframe quantity that is included in a service cycle and that is expressed in a bit form; or
a sidelink synchronization signal cycle quantity that is included in a service cycle and that is expressed in a bit form.

FIG 14 is a schematic structural diagram of a base station according to an embodiment of the present invention. Referring to FIG 14, the base station includes: a receiving unit 1401, configured to receive first service cycle indication information sent by UE, where the first service cycle indication information is used to indicate that a service cycle of to-be-sent data is a first cycle; an allocation unit 1402, configured to allocate a first transmission resource that meets the first cycle to the UE based on the first service cycle indication information; and a sending unit 1403, configured to send first transmission resource indication information to the UE, where the first transmission resource indication information is used to indicate the first transmission resource. The allocation unit 1402 is further configured to reallocate a transmission resource based on second service cycle indication information when receiving the second service cycle indication information of the UE. The second service cycle indication information is used to indicate that the service cycle of the to-be-sent data changes to a second cycle.

Optionally, the allocation unit 1402 is configured to allocate a second transmission resource that meets the second cycle to the UE, and send second transmission resource indication information to the UE. The second transmission resource indication information is used to indicate the second transmission resource.

Optionally, the first service cycle indication information and the second service cycle indication information are carried in a D2D transmission resource request, a BSR, RRC signaling, an uplink control channel, or a MAC CE.

Optionally, an expression form for the first service cycle indication information and the second service cycle indication information is:
a cycle in which a next data packet is located relative to a current cycle and that is expressed in a bit form; or
a cycle interval between adjacent data packets that is expressed in a bit form; or
a minimum cycle quantity that is included in a service cycle and that is expressed in a bit form; or
a resource pool cycle quantity that is included in a service cycle and that is expressed in a bit form; or
a radio frame quantity that is included in a service cycle and that is expressed in a bit form; or
a subframe quantity that is included in a service cycle and that is expressed in a bit form; or
a sidelink synchronization signal cycle quantity that is included in a service cycle and that is expressed in a bit form.

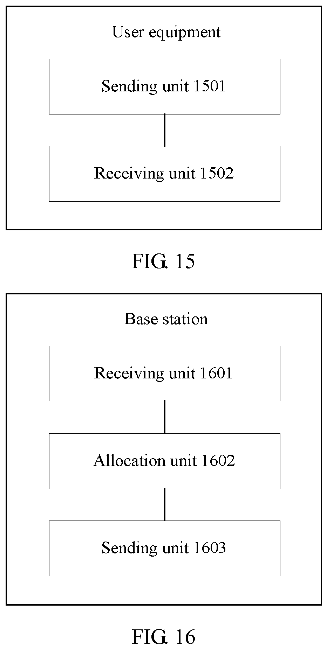

FIG 15 is a schematic structural diagram of user equipment according to an embodiment of the present invention. Referring to FIG 15, the user equipment includes:
a sending unit 1501, configured to send third service cycle indication information to a base station, where the third service cycle indication information is used to indicate that a service cycle of to-be-sent data is a third cycle; and
a receiving unit 1502, configured to receive first uplink transmission resource indication information sent by the base station, where the first uplink transmission resource indication information is used to indicate a first uplink transmission resource that meets the third cycle.

The sending unit 1501 is further configured to transmit uplink data on the first uplink transmission resource.

Optionally, the sending unit 1501 is further configured to send fourth service cycle indication information to the base station when the service cycle changes. The fourth service cycle indication information is used to indicate that the service cycle of the to-be-sent data changes to a fourth cycle, and the third cycle and the fourth cycle are different.

The receiving unit 1502 is further configured to receive second uplink transmission resource indication information sent by the base station. The second uplink transmission resource indication information is used to indicate a second uplink transmission resource that meets the fourth cycle. The sending unit 1501 is further configured to transmit uplink data on the second uplink transmission resource.

Optionally, the third service cycle indication information is carried in an uplink transmission resource request, a BSR, RRC signaling, an uplink control channel, or a MAC CE.

Optionally, an expression form for the third service cycle indication information is:
a cycle in which a next data packet is located relative to a current cycle and that is expressed in a bit form; or
a cycle interval between adjacent data packets that is expressed in a bit form; or
a minimum cycle quantity that is included in a service cycle and that is expressed in a bit form; or
a resource pool cycle quantity that is included in a service cycle and that is expressed in a bit form; or
a radio frame quantity that is included in a service cycle and that is expressed in a bit form; or
a subframe quantity that is included in a service cycle and that is expressed in a bit form; or
a sidelink synchronization signal cycle quantity that is included in a service cycle and that is expressed in a bit form.

FIG 16 is a schematic structural diagram of a base station according to an embodiment of the present invention. Referring to FIG 16, the base station includes:
a receiving unit 1601, configured to receive third service cycle indication information sent by UE, where the third service cycle indication information is used to indicate that a service cycle of to-be-sent data is a third cycle;
an allocation unit 1602, configured to allocate a first uplink transmission resource that meets the third cycle to the UE based on the third service cycle indication information; and
a sending unit 1603, configured to send first uplink transmission resource indication information to the UE, where the first uplink transmission resource indication information is used to indicate the first uplink transmission resource that meets the third cycle.

Optionally, the allocation unit 1602 is further configured to reallocate an uplink transmission resource based on fourth service cycle indication information when receiving the fourth service cycle indication information of the UE. The fourth service cycle indication information is used to indicate that the service cycle of the to-be-sent data changes to a fourth cycle.

Optionally, the allocation unit 1602 is further configured to allocate a second uplink transmission resource that meets the fourth cycle to the UE. The sending unit 1603 is further configured to send second uplink transmission resource indication information to the UE. The second uplink transmission resource indication information is used to indicate the fourth transmission resource. Optionally, the third service cycle indication information is carried in an uplink transmission resource request, a BSR, RRC signaling, an uplink control channel, or a MAC CE.

Optionally, an expression form for the third service cycle indication information is:
a cycle in which a next data packet is located relative to a current cycle and that is expressed in a bit form; or
a cycle interval between adjacent data packets that is expressed in a bit form; or
a minimum cycle quantity that is included in a service cycle and that is expressed in a bit form; or
a resource pool cycle quantity that is included in a service cycle and that is expressed in a bit form; or
a radio frame quantity that is included in a service cycle and that is expressed in a bit form; or
a subframe quantity that is included in a service cycle and that is expressed in a bit form; or
a sidelink synchronization signal cycle quantity that is included in a service cycle and that is expressed in a bit form.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

## Claims

1. A device-to-device, D2D, communication method, performed by a user equipment, comprising:
sending (601) first service cycle indication information to a base station, wherein the first service cycle indication information is used to indicate that a service cycle of to-be-sent data is a first cycle having a first time duration;
receiving (603) first transmission resource indication information from the base station, wherein the first transmission resource indication information is used to indicate a first transmission resource for sending the to-be-sent data of the first cycle;
performing (604) D2D communication on the first transmission resource; and
when the user equipment detects that the service cycle changes, sending (605) second service cycle indication information to the base station,
wherein the second service cycle indication information is used to indicate that the service cycle of the to-be-sent data is a second cycle having a second time duration, and the first time duration and the second time duration are different;
receiving second transmission resource indication information from the base station, wherein the second transmission resource indication information is used to indicate a second transmission resource for sending the to-be-sent data of the second cycle; and
performing D2D communication on the second transmission resource.

2. The method according to claim 1, wherein the first service cycle indication information and the second service cycle indication information are carried in a Radio Resource Control, RRC, signaling.

3. A D2D communication method, performed by a base station, comprising:
receiving (601) first service cycle indication information from a user equipment, wherein the first service cycle indication information is used to indicate that a service cycle of to-be-sent data is a first cycle having a first time duration;
allocating (602) a first transmission resource for sending the to-be-sent data of the first cycle to the user equipment, so that the user equipment performs D2D communication on the first transmission resource;
sending (603) first transmission resource indication information to the user equipment, wherein the first transmission resource indication information is used to indicate the first transmission resource;
receiving (605) second service cycle indication information from the user equipment, wherein the second service cycle indication information is used to indicate that the service cycle of the to-be-sent data is a second cycle having a second time duration, and the first time duration and the second time duration are different; and
reallocating (606), by the base station, a second transmission resource for sending the to-be sent data of the second cycle, wherein the reallocating a second transmission resource for sending the to-be sent data of the second cycle, comprises:
allocating the second transmission resource for sending the to-be-sent data of the second cycle to the user equipment, and sending second transmission resource indication information to the user equipment, wherein the second transmission resource indication information is used to indicate the second transmission resource, so that the user equipment performs D2D communication on the second transmission resource.

4. The method according to claim 3, wherein the first service cycle indication information and the second service cycle indication information are carried in a RRC signaling.

5. User equipment, comprising:
a sending unit (1301), configured to send first service cycle indication information to a base station, wherein the first service cycle indication information is used to indicate that a service cycle of to-be-sent data is a first cycle having a first time duration;
a receiving unit (1302), configured to receive first transmission resource indication information from the base station, wherein the first transmission resource indication information is used to indicate a first transmission resource for sending the to-be-sent data of the first cycle;
the sending unit is configured to perform D2D communication on the first transmission resource; and
when the user equipment detects that the service cycle changes, the sending unit is configured to send second service cycle indication information to the base station,
wherein the second service cycle indication information is used to indicate that the service cycle of the to-be-sent data is a second cycle having a second time duration, and the first time duration and the second time duration are different;
the receiving unit is configured to receive second transmission resource indication information from the base station, wherein the second transmission resource indication information is used to indicate a second transmission resource for sending the to-be-sent data of the second cycle; and
the sending unit is configured to perform D2D communication on the second transmission resource.

6. The user equipment according to claim 5, wherein the first service cycle indication information and the second service cycle indication information are carried in a Radio Resource Control, RRC, signaling.

7. Abase station, comprising:
a receiving unit (1401), configured to receive first service cycle indication information from a user equipment, wherein the first service cycle indication information is used to indicate that a service cycle of to-be-sent data is a first cycle having a first time duration;
an allocation unit (1402), configured to allocate a first transmission resource for sending the to-be-sent data of the first cycle to the user equipment, so that the user equipment performs D2D communication on the first transmission resource;
a sending unit (1403), configured to send first transmission resource indication information to the user equipment, wherein the first transmission resource indication information is used to indicate the first transmission resource;
the receiving unit is configured to receive second service cycle indication information from the user equipment, wherein the second service cycle indication information is used to indicate that the service cycle of the to-be-sent data is a second cycle having a second time duration, and the first time duration and the second time duration are different; and
the allocation unit is configured to reallocate a second transmission resource for sending the to-be sent data of the second cycle, wherein the allocation unit is configured to reallocate a second transmission resource for sending the to-be sent data of the second cycle, comprises:
the allocation unit is configured to allocate the second transmission resource for sending the to-be-sent data of the second cycle to the user equipment, and the sending unit is configured to send second transmission resource indication information to the user equipment, wherein the second transmission resource indication information is used to indicate the second transmission resource, so that the user equipment performs D2D communication on the second transmission resource.

8. The base station according to claim 7, wherein the first service cycle indication information and the second service cycle indication information are carried in a RRC signaling.

9. A computer program product comprising instructions which, when executed by a processor included in a user equipment, cause the user equipment to carry out the method according to any one of claims 1 to 2.

10. A computer program product comprising instructions which, when executed by a processor included in a base station, cause the base station to carry out the method according to any one of claims 3 to 4.

## Patentansprüche

1. Vorrichtung-zu-Vorrichtung- bzw. D2D-Kommunikationsverfahren, durchgeführt durch ein Benutzergerät, das Folgendes umfasst:
Senden (601) von ersten Dienstzyklusanzeigeinformationen an eine Basisstation, wobei die ersten Dienstzyklusanzeigeinformationen verwendet werden, um anzuzeigen, dass ein Dienstzyklus von zu sendenden Daten ein erster Zyklus ist, der eine erste Zeitdauer aufweist;
Empfangen (603) von ersten Übertragungsressourcenanzeigeinformationen von der Basisstation, wobei die ersten Übertragungsressourcenanzeigeinformationen verwendet werden, um eine erste Übertragungsressource zum Senden der zu sendenden Daten des ersten Zyklus anzuzeigen;
Durchführen (604) von D2D-Kommunikation auf der ersten Übertragungsressource; und
wenn das Benutzergerät detektiert, dass sich der Dienstzyklus ändert, Senden (605) von zweiten Dienstzyklusanzeigeinformationen an die Basisstation,
wobei die zweiten Dienstzyklusanzeigeinformationen verwendet werden, um anzuzeigen, dass der Dienstzyklus der zu sendenden Daten ein zweiter Zyklus ist, der eine zweite Zeitdauer aufweist, und wobei die erste Zeitdauer und die zweite Zeitdauer verschieden sind;
Empfangen von zweiten Übertragungsressourcenanzeigeinformationen von der Basisstation, wobei die zweiten Übertragungsressourcenanzeigeinformationen verwendet werden, um eine zweite Übertragungsressource zum Senden der zu sendenden Daten des zweiten Zyklus anzuzeigen; und
Durchführen von D2D-Kommunikation auf der zweiten Übertragungsressource.

2. Verfahren nach Anspruch 1, wobei die ersten Dienstzyklusanzeigeinformationen und die zweiten Dienstzyklusanzeigeinformationen in einer Funkressourcensteuerungs- bzw. RRC-Signalisierung getragen werden.

3. D2D-Kommunikationsverfahren, durchgeführt durch eine Basisstation, das Folgendes umfasst:
Empfangen (601) von ersten Dienstzyklusanzeigeinformationen von einem Benutzergerät, wobei die ersten Dienstzyklusanzeigeinformationen verwendet werden, um anzuzeigen, dass ein Dienstzyklus von zu sendenden Daten ein erster Zyklus ist, der eine erste Zeitdauer aufweist;
Zuweisen (602) einer ersten Übertragungsressource zum Senden der zu sendenden Daten des ersten Zyklus an das Benutzergerät, sodass das Benutzergerät D2D-Kommunikation auf der ersten Übertragungsressource durchführt;
Senden (603) von ersten Übertragungsressourcenanzeigeinformationen an das Benutzergerät, wobei die ersten Übertragungsressourcenanzeigeinformationen verwendet werden, um die erste Übertragungsressource anzuzeigen;
Empfangen (605) von zweiten Dienstzyklusanzeigeinformationen vom Benutzergerät, wobei die zweiten Dienstzyklusanzeigeinformationen verwendet werden, um anzuzeigen, dass der Dienstzyklus der zu sendenden Daten ein zweiter Zyklus ist, der eine zweite Zeitdauer aufweist, und wobei die erste Zeitdauer und die zweite Zeitdauer verschieden sind; und
Neuzuweisen (606), durch die Basisstation, einer zweiten Übertragungsressource zum Senden der zu sendenden Daten des zweiten Zyklus, wobei das Neuzuweisen einer zweiten Übertragungsressource zum Senden der zu sendenden Daten des zweiten Zyklus Folgendes umfasst:
Zuweisen der zweiten Übertragungsressource zum Senden der zu sendenden Daten des zweiten Zyklus an das Benutzergerät und Senden von zweiten Übertragungsressourcenanzeigeinformationen an das Benutzergerät, wobei die zweiten Übertragungsressourcenanzeigeinformationen verwendet werden, um die zweite Übertragungsressource anzuzeigen, sodass das Benutzergerät D2D-Kommunikation auf der zweiten Übertragungsressource durchführt.

4. Verfahren nach Anspruch 3, wobei die ersten Dienstzyklusanzeigeinformationen und die zweiten Dienstzyklusanzeigeinformationen in einer RRC-Signalisierung getragen werden.

5. Benutzergerät, das Folgendes umfasst:
eine Sendeeinheit (1301), ausgelegt zum Senden von ersten Dienstzyklusanzeigeinformationen an eine Basisstation, wobei die ersten Dienstzyklusanzeigeinformationen verwendet werden, um anzuzeigen, dass ein Dienstzyklus von zu sendenden Daten ein erster Zyklus ist, der eine erste Zeitdauer aufweist;
eine Empfangseinheit (1302), ausgelegt zum Empfangen von ersten Übertragungsressourcenanzeigeinformationen von der Basisstation, wobei die ersten Übertragungsressourcenanzeigeinformationen verwendet werden, um eine erste Übertragungsressource zum Senden der zu sendenden Daten des ersten Zyklus anzuzeigen;
wobei die Sendeeinheit ausgelegt ist zum Durchführen von D2D-Kommunikation auf der ersten Übertragungsressource; und
wenn das Benutzergerät detektiert, dass sich der Dienstzyklus ändert, die Sendeeinheit ausgelegt ist zum Senden von zweiten Dienstzyklusanzeigeinformationen an die Basisstation,
wobei die zweiten Dienstzyklusanzeigeinformationen verwendet werden, um anzuzeigen, dass der Dienstzyklus der zu sendenden Daten ein zweiter Zyklus ist, der eine zweite Zeitdauer aufweist, und wobei die erste Zeitdauer und die zweite Zeitdauer verschieden sind;
wobei die Empfangseinheit ausgelegt ist zum Empfangen von zweiten Übertragungsressourcenanzeigeinformationen von der Basisstation, wobei die zweiten Übertragungsressourcenanzeigeinformationen verwendet werden, um eine zweite Übertragungsressource zum Senden der zu sendenden Daten des zweiten Zyklus anzuzeigen; und
wobei die Sendeeinheit ausgelegt ist zum Durchführen von D2D-Kommunikation auf der zweiten Übertragungsressource.

6. Benutzergerät nach Anspruch 5, wobei die ersten Dienstzyklusanzeigeinformationen und die zweiten Dienstzyklusanzeigeinformationen in einer Funkressourcensteuerungs- bzw. RRC-Signalisierung getragen werden.

7. Basisstation, die Folgendes umfasst:
eine Empfangseinheit (1401), ausgelegt zum Empfangen von ersten Dienstzyklusanzeigeinformationen von einem Benutzergerät, wobei die ersten Dienstzyklusanzeigeinformationen verwendet werden, um anzuzeigen, dass ein Dienstzyklus von zu sendenden Daten ein erster Zyklus ist, der eine erste Zeitdauer aufweist;
eine Zuweisungseinheit (1402), ausgelegt zum Zuweisen einer ersten Übertragungsressource zum Senden der zu sendenden Daten des ersten Zyklus an das Benutzergerät, sodass das Benutzergerät D2D-Kommunikation auf der ersten Übertragungsressource durchführt;
eine Sendeeinheit (1403), ausgelegt zum Senden von ersten Übertragungsressourcenanzeigeinformationen an das Benutzergerät, wobei die ersten Übertragungsressourcenanzeigeinformationen verwendet werden, um die erste Übertragungsressource anzuzeigen;
wobei die Empfangseinheit ausgelegt ist zum Empfangen von zweiten Dienstzyklusanzeigeinformationen vom Benutzergerät, wobei die zweiten Dienstzyklusanzeigeinformationen verwendet werden, um anzuzeigen, dass der Dienstzyklus der zu sendenden Daten ein zweiter Zyklus ist, der eine zweite Zeitdauer aufweist, und wobei die erste Zeitdauer und die zweite Zeitdauer verschieden sind; und
wobei die Zuweisungseinheit ausgelegt ist zum Neuzuweisen einer zweiten Übertragungsressource zum Senden der zu sendenden Daten des zweiten Zyklus, wobei, dass die Zuweisungseinheit ausgelegt ist zum Neuzuweisen einer zweiten Übertragungsressource zum Senden der zu sendenden Daten des zweiten Zyklus, Folgendes umfasst:
die Zuweisungseinheit ist ausgelegt zum Zuweisen der zweiten Übertragungsressource zum Senden der zu sendenden Daten des zweiten Zyklus an das Benutzergerät, und die Sendeeinheit ist ausgelegt zum Senden von zweiten Übertragungsressourcenanzeigeinformationen an das Benutzergerät, wobei die zweiten Übertragungsressourcenanzeigeinformationen verwendet werden, um die zweite Übertragungsressource anzuzeigen, sodass das Benutzergerät D2D-Kommunikation auf der zweiten Übertragungsressource durchführt.

8. Basisstation nach Anspruch 7, wobei die ersten Dienstzyklusanzeigeinformationen und die zweiten Dienstzyklusanzeigeinformationen in einer RRC-Signalisierung getragen werden.

9. Computerprogrammprodukt, umfassend Anweisungen, die, wenn sie durch einen in einem Benutzergerät enthaltenen Prozessor ausgeführt werden, das Benutzergerät veranlassen, das Verfahren nach einem der Ansprüche 1 bis 2 auszuführen.

10. Computerprogrammprodukt, umfassend Anweisungen, die, wenn sie durch einen in einer Basisstation enthaltenen Prozessor ausgeführt werden, die Basisstation veranlassen, das Verfahren nach einem der Ansprüche 3 bis 4 auszuführen.

## Revendications

1. Procédé de communication de dispositif à dispositif, D2D, réalisé par un équipement d'utilisateur, comportant les étapes consistant à :
envoyer (601) des premières informations d'indication de cycle de service à une station de base, les premières informations d'indication de cycle de service étant utilisées pour indiquer qu'un cycle de service de données à émettre est un premier cycle présentant une première durée ;
recevoir (603) des premières informations d'indication de ressource de transmission en provenance de la station de base, les premières informations d'indication de ressource de transmission étant utilisées pour indiquer une première ressource de transmission servant à émettre les données à émettre du premier cycle ;
réaliser (604) une communication D2D sur la première ressource de transmission ; et
lorsque l'équipement d'utilisateur détecte que le cycle de service change, envoyer (605) des secondes informations d'indication de cycle de service à la station de base, les secondes informations d'indication de cycle de service étant utilisées pour indiquer que le cycle de service des données à émettre est un second cycle présentant une seconde durée, et la première durée et la seconde durée étant différentes ;
recevoir des secondes informations d'indication de ressource de transmission en provenance de la station de base, les secondes informations d'indication de ressource de transmission étant utilisées pour indiquer une seconde ressource de transmission servant à émettre les données à émettre du second cycle ; et
réaliser une communication D2D sur la seconde ressource de transmission.

2. Procédé selon la revendication 1, les premières informations d'indication de cycle de service et les secondes informations d'indication de cycle de service étant transportées dans une signalisation de gestion des ressources radioélectriques, RRC.

3. Procédé de communication D2D, réalisé par une station de base, comportant les étapes consistant à :
recevoir (601) des premières informations d'indication de cycle de service en provenance d'un équipement d'utilisateur, les premières informations d'indication de cycle de service étant utilisées pour indiquer qu'un cycle de service de données à émettre est un premier cycle présentant une première durée ;
attribuer (602) à l'équipement d'utilisateur une première ressource de transmission servant à émettre les données à émettre du premier cycle, de telle sorte que l'équipement d'utilisateur réalise une communication D2D sur la première ressource de transmission ;
envoyer (603) des premières informations d'indication de ressource de transmission à l'équipement d'utilisateur, les premières informations d'indication de ressource de transmission étant utilisées pour indiquer la première ressource de transmission ;
recevoir (605) des secondes informations d'indication de cycle de service en provenance de l'équipement d'utilisateur, les secondes informations d'indication de cycle de service étant utilisées pour indiquer que le cycle de service des données à émettre est un second cycle présentant une seconde durée, et la première durée et la seconde durée étant différentes ; et
faire réattribuer (606), par la station de base, une seconde ressource de transmission servant à émettre les données à émettre du second cycle, la réattribution d'une seconde ressource de transmission servant à émettre les données à émettre du second cycle, comportant :
l'attribution à l'équipement d'utilisateur de la seconde ressource de transmission servant à émettre les données à émettre du second cycle, et l'envoi de secondes informations d'indication de ressource de transmission à l'équipement d'utilisateur, les secondes informations d'indication de ressource de transmission étant utilisées pour indiquer la seconde ressource de transmission, de telle sorte que l'équipement d'utilisateur réalise une communication D2D sur la seconde ressource de transmission.

4. Procédé selon la revendication 3, les premières informations d'indication de cycle de service et les secondes informations d'indication de cycle de service étant transportées dans une signalisation de RRC.

5. Équipement d'utilisateur, comportant :
une unité (1301) d'émission, configurée pour envoyer des premières informations d'indication de cycle de service à une station de base, les premières informations d'indication de cycle de service étant utilisées pour indiquer qu'un cycle de service de données à émettre est un premier cycle présentant une première durée ;
une unité (1302) de réception, configurée pour recevoir des premières informations d'indication de ressource de transmission en provenance de la station de base, les premières informations d'indication de ressource de transmission étant utilisées pour indiquer une première ressource de transmission servant à émettre les données à émettre du premier cycle ;
l'unité d'émission étant configurée pour réaliser une communication D2D sur la première ressource de transmission ; et
lorsque l'équipement d'utilisateur détecte que le cycle de service change, l'unité d'émission étant configurée pour envoyer des secondes informations d'indication de cycle de service à la station de base, les secondes informations d'indication de cycle de service étant utilisées pour indiquer que le cycle de service des données à émettre est un second cycle présentant une seconde durée, et la première durée et la seconde durée étant différentes ;
l'unité de réception étant configurée pour recevoir des secondes informations d'indication de ressource de transmission en provenance de la station de base, les secondes informations d'indication de ressource de transmission étant utilisées pour indiquer une seconde ressource de transmission servant à émettre les données à émettre du second cycle ; et
l'unité d'émission étant configurée pour réaliser une communication D2D sur la seconde ressource de transmission.

6. Équipement d'utilisateur selon la revendication 5, les premières informations d'indication de cycle de service et les secondes informations d'indication de cycle de service étant transportées dans une signalisation de gestion des ressources radioélectriques, RRC.

7. Station de base, comportant :
une unité (1401) de réception, configurée pour recevoir des premières informations d'indication de cycle de service en provenance d'un équipement d'utilisateur, les premières informations d'indication de cycle de service étant utilisées pour indiquer qu'un cycle de service de données à émettre est un premier cycle présentant une première durée ;
une unité (1402) d'attribution, configurée pour attribuer à l'équipement d'utilisateur une première ressource de transmission servant à émettre les données à émettre du premier cycle, de telle sorte que l'équipement d'utilisateur réalise une communication D2D sur la première ressource de transmission ;
une unité (1403) d'émission, configurée pour envoyer des premières informations d'indication de ressource de transmission à l'équipement d'utilisateur, les premières informations d'indication de ressource de transmission étant utilisées pour indiquer la première ressource de transmission ;
l'unité de réception étant configurée pour recevoir des secondes informations d'indication de cycle de service en provenance de l'équipement d'utilisateur, les secondes informations d'indication de cycle de service étant utilisées pour indiquer que le cycle de service des données à émettre est un second cycle présentant une seconde durée, et la première durée et la seconde durée étant différentes ; et
l'unité d'attribution étant configurée pour réattribuer une seconde ressource de transmission servant à émettre les données à émettre du second cycle, le fait que l'unité d'attribution soit configurée pour réattribuer une seconde ressource de transmission, servant à émettre les données à émettre du second cycle, comportant :
le fait que l'unité d'attribution soit configurée pour attribuer à l'équipement d'utilisateur la seconde ressource de transmission servant à émettre les données à émettre du second cycle, et le fait que l'unité d'émission soit configurée pour envoyer des secondes informations d'indication de ressource de transmission à l'équipement d'utilisateur, les secondes informations d'indication de ressource de transmission étant utilisées pour indiquer la seconde ressource de transmission, de telle sorte que l'équipement d'utilisateur réalise une communication D2D sur la seconde ressource de transmission.

8. Station de base selon la revendication 7, les premières informations d'indication de cycle de service et les secondes informations d'indication de cycle de service étant transportées dans une signalisation de RRC.

9. Produit de programme informatique comportant des instructions qui, lorsqu'elles sont exécutées par un processeur inclus dans un équipement d'utilisateur, amènent l'équipement d'utilisateur à réaliser le procédé selon l'une quelconque des revendications 1 et 2.

10. Produit de programme informatique comportant des instructions qui, lorsqu'elles sont exécutées par un processeur inclus dans une station de base, amènent la station de base à réaliser le procédé selon l'une quelconque des revendications 3 er 4.
